# EUROPÄISCHE PATENTSCHRIFT

(11) **EP 1 586 471 B1**
(45) Veröffentlichungstag und Bekanntmachung des Hinweises auf die Patenterteilung: **30.01.2008**
(21) Anmeldenummer: 05005546.6
(22) Anmeldetag: 15.03.2005
(51) Int. Cl.: B60D 1/54, B60D 1/06

(54) **Anhängerkupplung**
Trailer coupling
Attelage de remorque

(30) Priorität: 17.04.2004 DE 202004006204 U
(43) Veröffentlichungstag der Anmeldung: 19.10.2005
(73) Patentinhaber: WESTFALIA - Automotive GmbH, 33378 Rheda-Wiedenbrück (DE)
(72) Erfinder: Abels, Frank O., 29633 Munster (DE); Von Alm, Günther, 29614 Soltau (DE)
(74) Vertreter: Reimold, Otto

(56) Entgegenhaltungen:
- EP-A- 1 380 445
- DE-A1- 3 328 524
- DE-A1- 10 023 640
- DE-A1- 10 023 641
- DE-A1- 10 243 044
- DE-A1- 10 243 045
- DE-U1-6202004 006 66
- US-B1- 6 447 000

## Beschreibung

Die Erfindung betrifft eine Anhängekupplung für Kraftfahrzeuge, insbesondere für Personenkraftwagen, nach dem oberbegriff des Anspruchs 1, 2 oder 3.

Eine solche Anhängekupplung ist z.B. aus der DE 100 23 640 A1 bekannt. Das Drehachsglied ist in einem Führungsschlitz geführt, der ein außerhalb des Gehäuses angeordnetes Führungselement zum Schwenken des Drehachsglieds bildet, und schwenkt um eine Schwenkachse, bis ein Hebelarmglied an eine ortsfeste Anschlagfläche anschlägt. Die Vorschubeinrichtung ist über das Hebelarmglied exzentrisch an das Drehachsglied angelenkt, so dass das Drehachsglied schwenkt, wenn es in den Bereich einer Schlitzerweiterung des Führungsschlitzes gelangt. Die Vorschubeinrichtung drückt das Hebelarmglied fest an die Anschlagfläche, so dass sich eine festgespannte Gebrauchsstellung ergibt.

Ein mit einer Kugel versehener Kupplungsarm der Anhängekupplung ist aus einer von außerhalb des Kraftfahrzeuges z.B. nicht sichtbaren Ruhestellung in eine zum Befestigen eines Anhängers geeignete Betriebsstellung motorisch oder manuell angetrieben bewegbar.

Es sind verschiedene Ausführungsformen solcher motorisch angetriebener Anhängekupplungen bekannt, z.B. aus der DE 198 26 618, DE 199 44 264 und DE 100 04 523, bei denen eine senkrecht stehende Kugelstange durch motorischen Antrieb zunächst axial nach unten bewegt werden, so dass die Kugel der Kugelstange unterhalb des Stossfängers liegt, danach wird die Kugelstange um ca. 90 DEG seitlich verdreht und anschließend motorisch wieder angehoben, bis die Kugelstange sich in der Betriebsstellung befindet. Diese Ausführungsformen haben folgende Nachteile:

Die Bodenfreiheit reicht (je nach Fahrzeugtyp) gelegentlich nicht aus, besonders wenn das Fahrzeug über einer Bordsteinkante steht.

Die senkrecht angeordnete Kugelstange hat eine Bauform, die bei modernen Fahrzeugen mit besonders niedrig liegender Kofferraumkante nicht in das Fahrzeug integriert werden kann.

Aufwendige Konstruktion - teilweise mit 2 Motoren - um die drei Bewegungsschritte Senken, Schwenken, Heben zu realisieren

Aufwendige Steuerung der Bewegungsschritte entweder mechanisch oder elektrisch sowie passgenaue und damit teure Führungen sind erforderlich, die wegen der eingeleiteten Betriebskräfte teure Materialien und Bearbeitungsverfahren notwendig machen.

Es sind weitere Ausführungsformen bekannt, bei denen die Kugelstange an einem fahrzeugfesten Drehlager angeordnet sind und durch einen Motor die Kugelstange aus einer unterhalb des Fahrzeugbodens befindlichen Ruhestellung in die Betriebsstellung geschwenkt wird, wie z.B. in DE 196 54 867 und DE 196 12 959 oder WO 98/57 813 beschrieben. Diese Ausführungsformen haben folgende Nachteile:

Die Bodenfreiheit reicht bei bestimmten Ausführungsformen und Fahrzeugen ebenfalls nicht aus.

Bei einigen Fahrzeugformen sind sie wegen der Art des Fahrzeugbodens nur schwer oder gar nicht zu integrieren.

Die Getriebemotoren sind hohen Belastungen ausgesetzt, wodurch sie aufwendig und teuer werden. Es sind bei bestimmten Ausführungsformen zum Festsetzen der Kugelstange zusätzliche Verriegelungsvorrichtungen erforderlich, die starkem verschleiß unterliegen und teuer in der Herstellung sind.

Die Hauptschwenklager unterliegen starken Betriebskräften und müssen daher in aufwendigen und teuren Techniken hergestellt werden.

Es sind schließlich Ausführungsformen bekannt, z.B. DE 100 23 640 und DE 101 04 185, bei denen die Kugelstange schwenkbar in einem Lagerblock sitzt, wobei der Lagerblock selber um eine in Fahrzeugrichtung angeordnete Achse schwenken kann, wodurch eine senkende und danach schwenkende Bewegung erzeugt wird. Diese Ausführungsform, die sich zwar sehr gut in Fahrzeuge integrieren lässt, hat dennoch folgende Nachteile:

Zur Realisierung der Bewegung sind unter Umstanden 2 Motoren erforderlich

Es gibt wiederum drei Bewegungsschritte - Senken - Drehen - Heben - dazu ist eine spezielle Steuerung erforderlich.

Die Herstellung ist wegen zweier großer, die ganz Last aufnehmenden Lager aufwendig und teuer.

Nachdem verschiedene motorisch angetriebene Anhängekupplungen mittlerweile produziert werden, und es sich herausgestellt hat, dass alle bekannten Typen in der Herstellung für den automobilen Massenmarkt zu teuer sind, ist es die Aufgabe der Erfindung, eine motorisch angetriebene Anhängekupplung zu schaffen, die besonders einfach und billig in der Herstellung ist.

Zur Lösung der Aufgabe ist eine Anhängekupplung gemäß der technischen Lehre des Anspruchs 1 2 oder 3 vorgesehen.

Ein Ausführungsbeispiel der Erfindung ist in den folgenden Abbildungen dargestellt. Aus Gründen der Übersichtlichkeit wurde auf die Darstellung des Trägers, mit dem die Anhängerkupplung am Fahrzeug befestigt wird, verzichtet. Ebenso ist die Deckplatte des Gehäuses der Anhängerkupplung nicht dargestellt, da sie den Blick auf die Funktionsbaugruppen verbirgt.

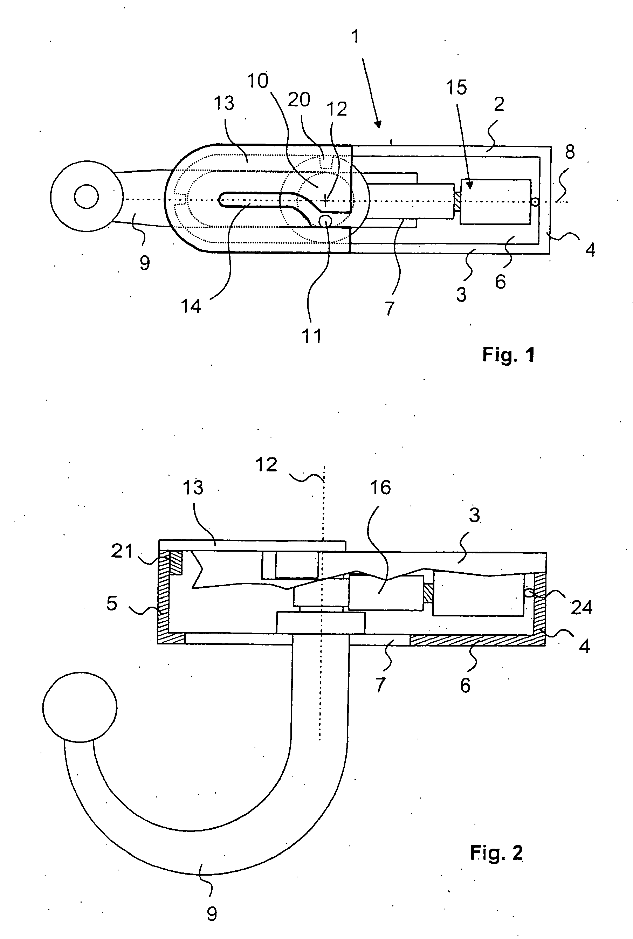

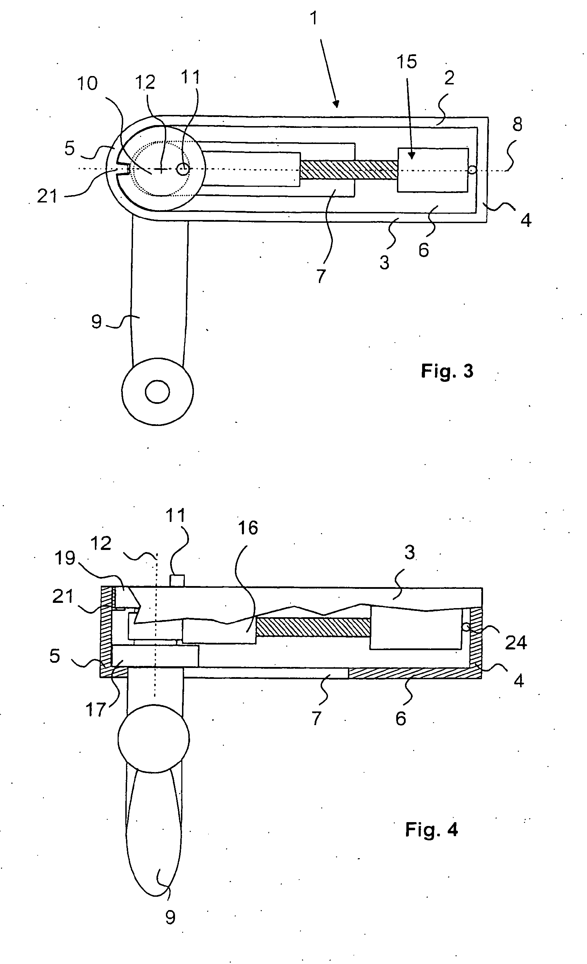

Anhand der Figuren 1 bis 13 wird die Funktion der Erfindung erläutert.

Eine beispielhafte Ausführung der erfindungsgemäßen Anhängerkupplung besteht aus einem wannenförmigen Gehäuse 1 mit Seitenwänden 2, 3, einer Gehäuserückwand 4, einer vorderen Gehäusewand 5 sowie einem Gehäuseboden 6 mit einem Schlitz 7.

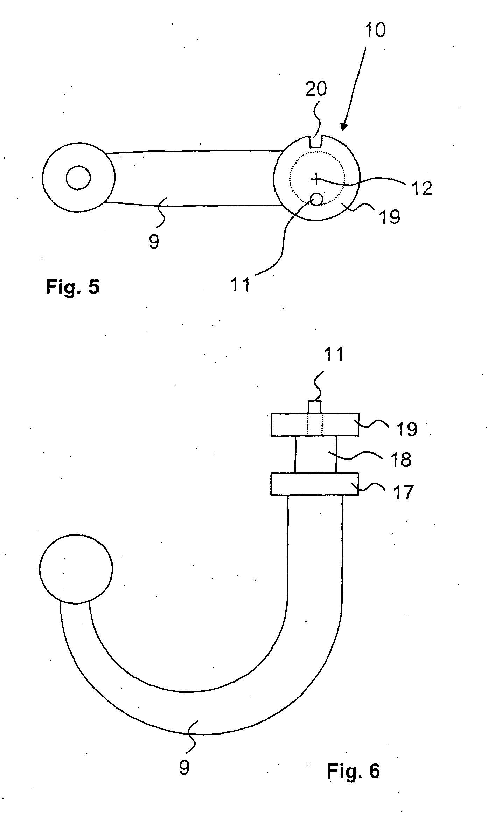

Durch den Schlitz 7 im Gehäuseboden 6 ragt ein Kugelarm 9 hindurch. Der sich im Gehäuse 1 befindliche Teil des Kugelarmes 9 ist als Drehachsglied 10 ausgeführt. Das Drehachsglied 10 besitzt im unteren und oberen Teil eine zylindrische Form, dessen Durchmesser größer als die lichte Weite des Schlitzes 7. Der obere Teil des Drehachsgliedes 10 besitzt eine Trapeznut und wird in Fig. 5 näher beschrieben. Zwischen dem oberen und unteren Teil des Drehachsgliedes 10 ist eine Ringnut 18 angeordnet, in die eine Anlenkung 16 eines Linearantriebes 15 eingreift. Der Linearantrieb 15 ist an der Gehäuserückwand 4 in einem Lager 24 schwenkbar gelagert.

Fig. 1 zeigt die Anhängerkupplung in Nichtgebrauchsstellung in einer Draufsicht, Fig. 2 in einer Seitenansicht.

Der Linearantrieb 15 ist ganz eingefahren, der Kugelarm 9 ist im Schlitz 7 in Richtung Gehäuserückwand 4 zurückgezogen. Der Kugelarm 9 steht parallel zur Längsachse 8.

Fig. 3 zeigt die Anhängekupplung in der Gebrauchsstellung in einer Draufsicht. Fig. 4 in einer Seitenansicht. Die Kulisse 14 ist hier nicht dargestellt, um die Lage des Drehachsgliedes in der Gebrauchsstellung zu zeigen.

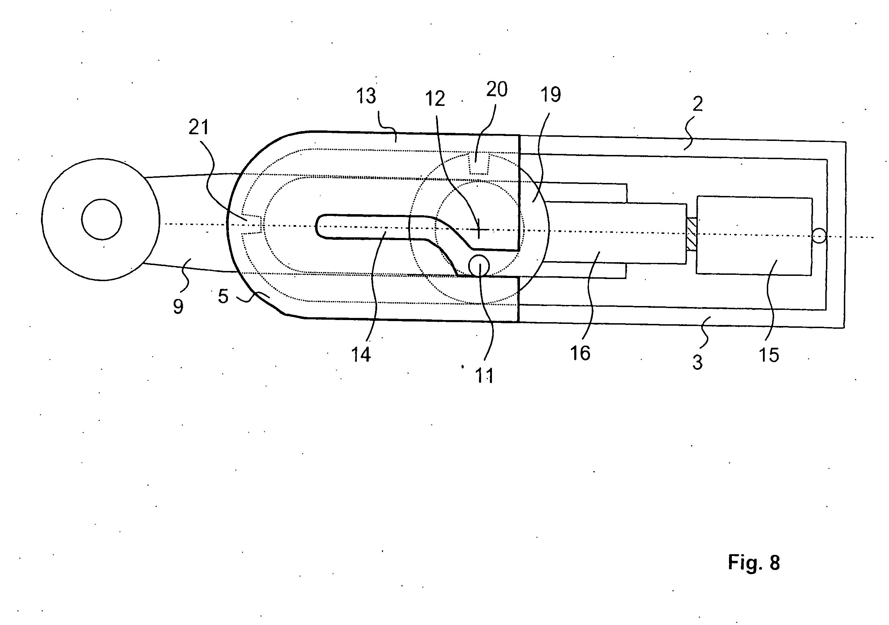

Der an einer Ringnut 18 am Drehachsglied 10 angreifende Linearantrieb 15 ist ausgefahren und hat den Kugelarm 9 gegen die vordere Gehäusewand 5 geschoben. Eine Trapeznase 21 greift in eine Trapeznut 20 ein. Während der Bewegung hat der Kugelarm 9 durch das Zusammenwirken von Stift 11 und Kulisse 14 eine Schwenkbewegung um die Schwenkachse 12 durchgeführt, welche in den Fig 8 bis 13 näher erläutert wird.

In der Gebrauchsstellung ist der Kugelarm 9 durch das Eingreifen der Trapeznase 21 an der Gehäuserückwand 5 in die Trapeznut 20 des Drehachsgliedes 10 sowie durch das Anliegen des unteren und oberen Teils 17, 19 des Drehachsgliedes 10 an der hinteren 2 und der vorderen Seitenwand 3 festgesetzt. Dadurch werden der Grossteil der Kräfte, die von außen z.B. durch einen Anhänger auf den Kugelarm 9 einwirken, in das Gehäuse 1 eingeleitet. Nur ein kleiner Teil dieser Kräfte wirken auf den Linearantrieb 15.

Fig. 5 zeigt den Kugelarm 9 mit dem Drehachsglied 10 in einer Draufsicht, Fig. 6 in einer Seitenansicht.

Das Drehachsglied 10 besteht aus einem unteren zylindrischen Teil 17 und einem oberen zylindrischen Teil 19. Im oberen Teil 19 ist eine Trapeznut 20 eingearbeitet. Zwischen dem unteren und oberen Teil 17, 19 ist eine Ringnut 18 angeordnet, an der der Linearantrieb 15 mit der Anlenkung 16 angreift.

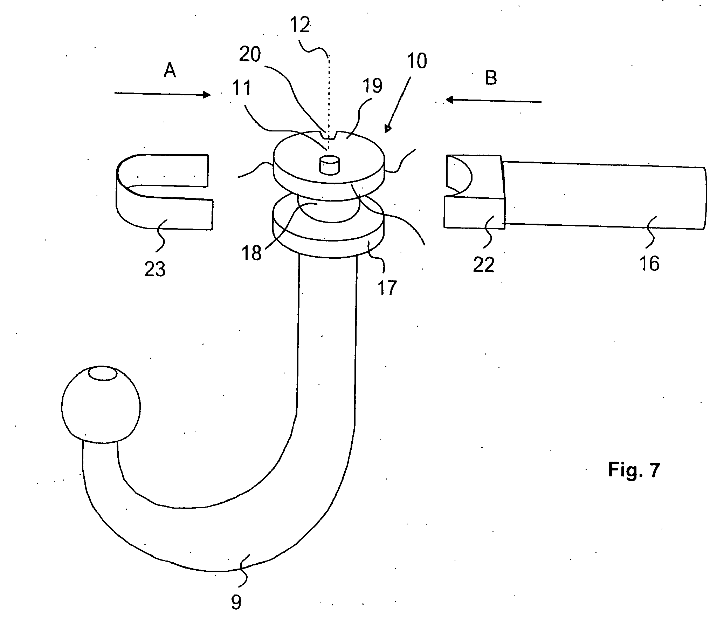

Fig. 7 zeigt die Verbindung zwischen Kugelarm 9 und Linearantrieb 15 in einer Explosionsdarstellung.

An der Anlenkung 16, die z.B. Teil einer Gewindehülse eines Spindelantriebes sein kann, befindet sich auf der dem Drehachsglied 10 zugewandten Seite eine teilkreisförmige Lagerfläche 22, deren Radius dem Radius der Ringnut 18 entspricht. Eine U-förmige Lagerfläche 23, die z.B. als U-förmiger Blechstreifen ausgeführt sein kann, umfasst den Kugelarm 9 in der Ringnut 18 und bildet bei Zusammenführung beider Teile in Pfeilrichtungen A, B mit der Lagerfläche 22 ein kreisförmiges Lager, in dem sich der Kugelarm 9 um die Schwenkachse 12 drehen kann. Die Verbindung zwischen den Lagerteilen 22, 23 ist hier nicht näher dargestellt, sie kann z.B. durch eine Schraub- oder Nietverbindung realisiert sein.

Die Fig 8 bis 13 zeigen den Ablauf eines Ausschwenkvorganges, der Einschwenkvorgang läuft sinngemäß in umgekehrter Reihenfolge ab.

In Fig. 8 befindet sich der Kugelarm 9 in der Nichtgebrauchsstellung. Der Stift 11 hat noch nicht in den Kulissenschlitz 14 eingegriffen. Unterer und oberer zylindrischer Teil 17, 19 des Drehachsgliedes 10 liegen an der hinteren und vorderen Gehäusewand 2, 3 an.

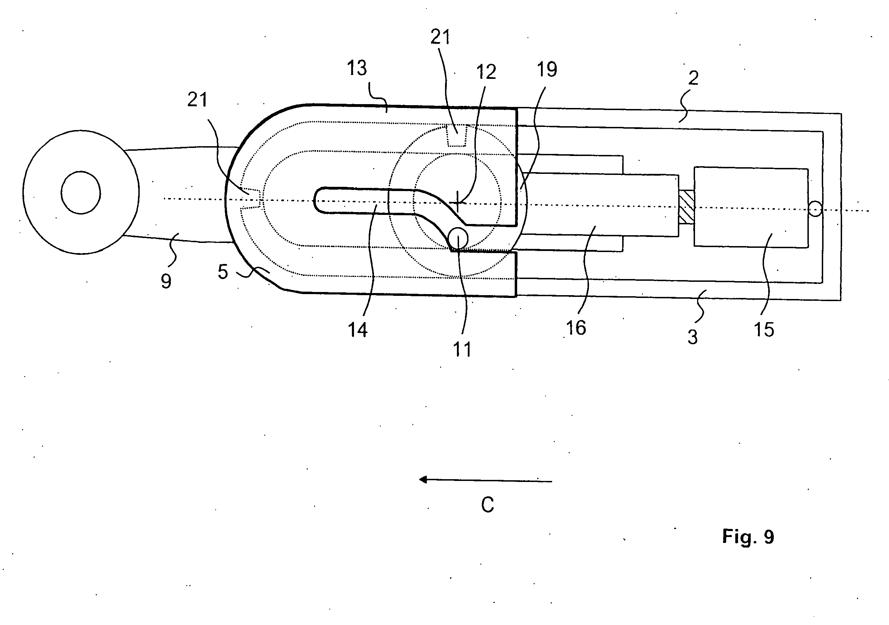

In Fig. 9 hat der Linearantrieb 15 die Anlenkung 16 und damit den Kugelarm 9 in Pfeilrichtung C bewegt. Der Stift 11 greift in den Kulissenschlitz 14 ein. An dieser Stelle endet die rein lineare Bewegung des Kugelarmes 9.

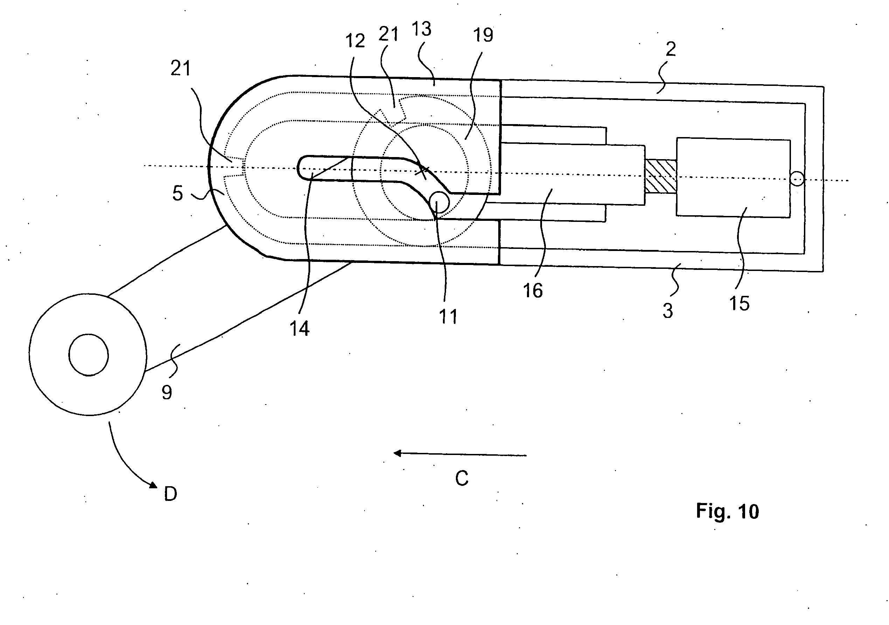

In Fig. 10 ist der Schwenkvorgang eingeleitet. Der Stift 11 folgt der Krümmung des Kulissenschlitzes 14, dadurch wird das Drehachsglied 10 und damit der Kugelarm 9 um die Schwenkachse 12 in Pfeilrichtung D geschwenkt. Die Bewegungen des Drehachsgliedes 10 sind in Längsrichtung des Gehäuses 1 durch den Linearantrieb 15 und rechtwinklig dazu durch den an der Wand des Kulissenschlitzes 14 anliegenden Stift 11 sowie durch die an der hinteren Seitenwand 2 anliegenden zylindrischer Teile 17, 19 begrenzt.

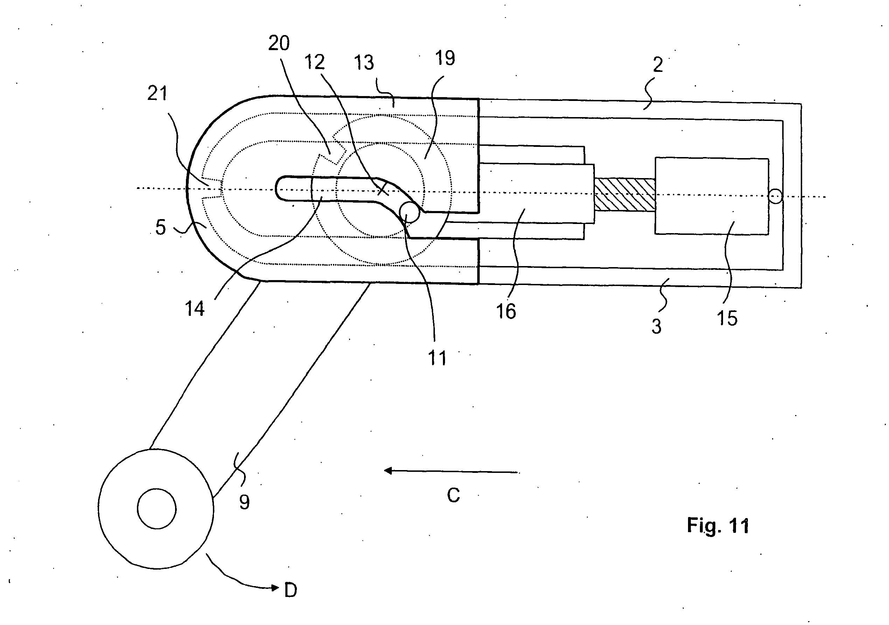

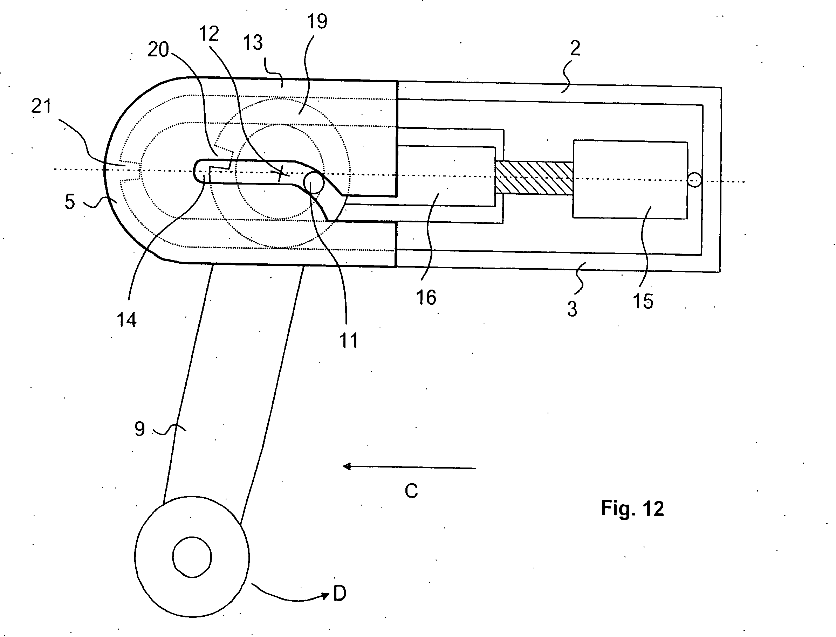

In Fig. 11 und 12 ist der weitere Ablauf des Schwenkvorganges dargestellt.

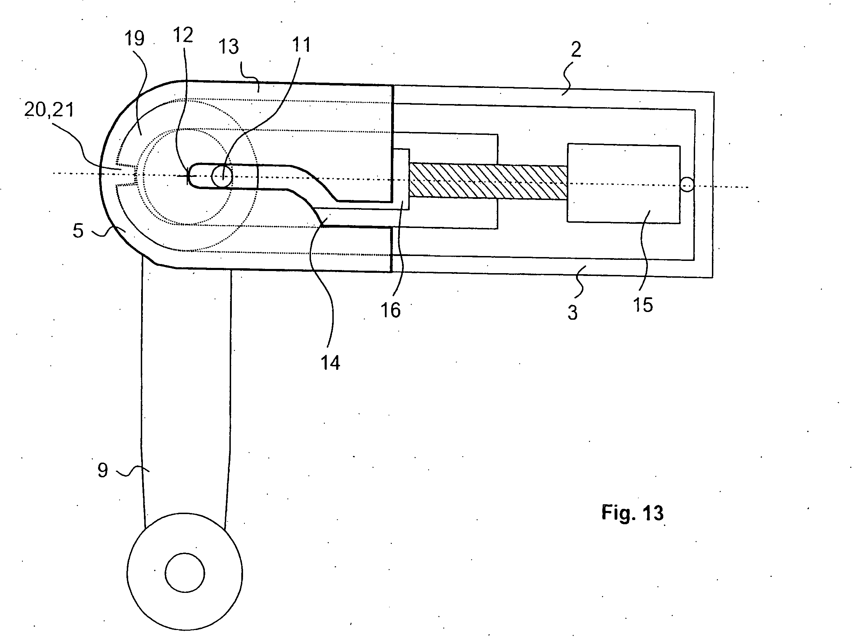

In Fig. 13 ist der Schwenkvorgang abgeschlossen, der Kugelarm 9 ist in der Gebrauchsstellung. Der Kugelarm 9 ist durch das Eingreifen der Trapeznase 21 an der Gehäuserückwand 5 in die Trapeznut 20 des Drehachsgliedes 10 sowie durch das Anliegen des unteren und oberen Teils 17, 19 des Drehachsgliedes 10 an der hinteren 2 und der vorderen Seitenwand 3 festgesetzt. Dadurch werden der Großteil der Kräfte, die von außen z.B. durch einen Anhänger auf den Kugelarm 9 einwirken, in das Gehäuse 1 eingeleitet. Nur ein kleiner Teil dieser Kräfte wirken auf den Linearantrieb 15.

Solange der Linearantrieb 15 sich nicht wieder in die entgegengesetzte Richtung bewegt, bleibt der Kugelarm 9 fest in der Gebrauchsstellung, von außen einwirkende Kräfte werden in das Gehäuse und entlang der Längsachse 8 in den Linearantrieb 15 eingeleitet.

## Patentansprüche

1. Anhängekupplung für Kraftfahrzeuge, insbesondere Personenkraftwagen, mit einem Kupplungsarm (9), der einends ein hochstehend angeordnetes Kopfstück zum lösbaren Befestigen eines Anhängers trägt und anderenends mit einem bewegbar in einem Gehäuse (1) gelagerten Drehachsglied (10) fest verbunden ist, wobei der Kupplungsarm (9) mittels einer Vorschubeinrichtung zwischen einer nach hinten gerichteten Gebrauchsstellung und einer weiter vorne angeordneten Nichtgebrauchsstellung hin und her verstellbar ist, wobei sich die Verstellbewegung mittels der manuell oder kraftbetriebenen Vorschubeinrichtung aus zwei Bewegungen zusammensetzt **dadurch gekennzeichnet, dass** das Drehachsglied (10) ausgehend von der Nichtgebrauchsstellung in einem ersten Bewegungsabschnitt in einem Gehäuse (1) verschoben und in einem zweiten Bewegungsabschnitt verschwenkt wird, so dass der Kupplungsarm (9) nach Vollendung beider Bewegungen, die sich überlagern können, die Gebrauchsstellung einnimmt, dass an dem oberen Ende des Drehachsgliedes (10) ein Mitnehmerbolzen (11) exzentrisch angeordnet ist, der innerhalb einer Kulisse (14) am Gehäuse. (1) läuft und das Drehachsglied (10) in Drehung um seine Mittelachse (12) versetzt, und dass das Drehachsglied (10) solange schwenkt, bis eine Ausnehmung (20) am Drehachsglied (10) in ein dazu passendes Formteil (21) am Gehäuse (1) eingreift und damit verkeilt ist, so dass das Drehachsglied (10) verdrehsicher gehalten wird.

2. Anhängekupplung für Kraftfahrzeuge, insbesondere Personenkraftwagen, mit einem Kupplungsarm (9), der einends ein hochstehend angeordnetes Kopfstück zum lösbaren Befestigen eines Anhängers trägt und anderenends mit einem bewegbar in einem Gehäuse (1) gelagerten Drehachsglied (10) fest verbunden ist, wobei der Kupplungsarm (9) mittels einer Vorschubeinrichtung zwischen einer nach hinten gerichteten Gebrauchsstellung und einer weiter vorne angeordneten Nichtgebrauchsstellung hin und her verstellbar ist, wobei die Anhängekupplung außerhalb des Gehäuses (1) angeordnete Führungselemente zum Schwenken des Kupplungsarmes aufweist und sich die Verstellbewegung mittels der manuell oder kraftbetriebenen Vorschubeinrichtung aus zwei Bewegungen zusammensetzte, **dadurch gekennzeichnet, dass** das Drehachsglied (10) ausgehend von der Nichtgebrauchsstellung in einem ersten Bewegungsabschnitt in einem Gehäuse (1) verschoben und in einem zweiten Bewegungsabschnitt verschwenkt wird, so dass der Kupplungsarm (9) nach Vollendung beider Bewegungen, die sich überlagern können, die Gebrauchsstellung einnimmt, und dass der Kupplungsarm solange schwenkt, bis eine Ausnehmung (20) am Drehachsglied (10) in ein dazu passendes Formteil (21) am Gehäuse (1) eingreift und damit verkeilt ist, so dass das Drehachsglied (10) verdrehsicher gehalten wird.

3. Anhängekupplung für Kraftfahrzeuge, insbesondere Personenkraftwagen, mit einem Kupplungsarm (9), der einends ein hochstehend angeordnetes Kopfstück zum lösbaren Befestigen eines Anhängers trägt und anderenends mit einem bewegbar in einem Gehäuses (1) gelagerten Drehachsglied (10) fest verbunden ist, wobei der Kupplungsarm (9) mittels einer Vorschubeinrichtung zwischen einer nach hinten gerichteten Gebrauchsstellung und einer weiter vorne angeordneten Nichtgebrauchsstellung hin und her verstellbar ist und sich die Verstellbewegung mittels der manuell oder kraftbetriebenen Vorschubeinrichtung aus zwei Bewegungen zusammensetzt, **dadurch gekennzeichnet, dass** das Drehachsglied (10) ausgehend von der Nichtgebrauchsstellung in einem ersten Bewegungsabschnitt in einem Gehäuse (1) verschoben und in einem zweiten Bewegungsabschnitt verschwenkt wird, so dass der Kupplungsarm (9) nach Vollendung beider Bewegungen die Gebrauchsstellung einnimmt, dass das Drehachsglied (10) in Zahnradform ausgebildet ist und am Ende seiner Linearbewegung auf eine am Gehäuse angeordnete Zahnstange trifft, in die das zahnradförmige Drehachsglied eingreift und das Drehachsglied (10) schwenkt, und dass das Drehachsglied (10) solange schwenkt, bis eine Ausnehmung (20) am Drehachsglied (10) in ein dazu passendes Formteil (21) am Gehäuse (1) eingreift und damit verkeilt ist, so dass das Drehachsglied (10) verdrehsicher gehalten wird.

4. Anhängekupplung nach Anspruch 1, 2 oder 3, **dadurch gekennzeichnet, dass** die Ausnehmung (20) und das Formteil (21) trapezförmig sind.

5. Anhängekupplung nach Anspruch 1, 2 oder 3, **dadurch gekennzeichnet, dass** das Gehäuse (1) einen durchgehenden. Gehäuseboden (6) oder mindestens zwei hintereinander in unterschiedlichen Winkeln zur Horizontale angeordnete Gehäusebodenteile aufweist.

6. Anhängekupplung nach Anspruch 1, 2 oder 3, **dadurch gekennzeichnet, dass** das Drehachsglied (10) um ca. 90 Grad geschwenkt wird, bis die Ausnehmung (20) am Drehachsglied (10) in das Formteil (21) am Gehäuse (1) eingreift.

7. Anhängekupplung nach Anspruch 1, 2 oder 3, **dadurch gekennzeichnet, dass** das Drehachsglied (10) durch den Pressdruck des Stellantriebes (15) in seiner Gebrauchsstellung verdrehsicher gehalten wird.

8. Anhängekupplung nach Anspruch 1, 2 oder 3, **dadurch gekennzeichnet, dass** das Drehachsglied (10) in der Gebrauchsstellung an einer hinteren (2) und einer vorderen Seitenwand (3) des Gehäuses (1) festgesetzt ist.

9. Anhängekupplung nach Anspruch 2, **dadurch gekennzeichnet, dass** die außerhalb des Gehäuses (1) angeordneten Führungselemente Leitbleche oder Schienen umfassen.

## Claims

1. Trailer coupling for motor vehicles, in particular motor cars, with a coupling arm (9) carrying at one end an upright head section for the releasable fastening of a trailer and firmly connected at the other end by a hinge element (10) mounted movably in a housing (1), wherein the coupling arm (9) is adjustable to and fro by means of a feed mechanism between a position of use facing towards the rear, and an inoperative position in which it is positioned further forward, wherein the adjustment movement by means of the manually or power-operated feed mechanism is comprised of two movements, **characterised in that** the hinge element (10), starting from the inoperative position, is shifted in a first movement section into a housing (1), and in a second movement section is swivelled so that the coupling arm (9), after completion of both movements, which may overlap, adopts the position of use, and that there is eccentrically mounted on the upper end of the hinge element (10) a driving pin (11) which runs inside a gate (4) on the housing (1) and sets the hinge element (10) into rotation around its centre axis (12), and that the hinge element (10) swivels until a recess (20) in the hinge element (10) engages with and is wedged by a matching formed part (21) on the housing (1), so that the hinge element (10) is held unable to rotate.

2. Trailer coupling for motor vehicles, in particular motor cars, with a coupling arm (9) carrying at one end an upright head section for the releasable fastening of a trailer and firmly connected at the other end by a hinge element (10) mounted movably in a housing (1), wherein the coupling arm (9) is adjustable to and fro by means of a feed mechanism between a position of use facing towards the rear, and an inoperative position in which it is positioned further forward, wherein the trailer coupling has guide elements fitted outside the housing (1) for swivelling the coupling arm and the adjustment movement by means of the manually or power-operated feed mechanism is comprised of two movements, **characterised in that** the hinge element (10), starting from the inoperative position, is shifted in a first movement section into a housing (1), and in a second movement section is swivelled so that the coupling arm (9), after completion of both movements, which may overlap, adopts the position of use, and that the coupling arm swivels until a recess (20) in the hinge element (10) engages with and is wedged by a matching formed part (21) on the housing (1), so that the hinge element (10) is held unable to rotate.

3. Trailer coupling for motor vehicles, in particular motor cars, with a coupling arm (9) carrying at one end an upright head section for the releasable fastening of a trailer and firmly connected at the other end by a hinge element (10) mounted movably in a housing (1), wherein the coupling arm (9) is adjustable to and fro by means of a feed mechanism between a position of use facing towards the rear, and an inoperative position in which it is positioned further forward, and the adjustment movement by means of the manually or power-operated feed mechanism is comprised of two movements, **characterised in that** the hinge element (10), starting from the inoperative position, is shifted in a first movement section into a housing (1), and in a second movement section is swivelled so that the coupling arm (9), after completion of both movements, which may overlap, adopts the position of use, and that the hinge element (10) is in the form of a gear and at the end of its linear movement strikes against a rack mounted in the housing, in which the gear-like hinge element engages and the hinge element (10) swivels, and that the hinge element (10) swivels until a recess (20) in the hinge element (10) engages with and is wedged by a matching formed part (21) on the housing (1), so that the hinge element (10) is held unable to rotate.

4. Trailer coupling according to claim 1, 2 or 3, **characterised in that** the recess (20) and the formed part (21) are trapezoidal.

5. Trailer coupling according to claim 1, 2 or 3, **characterised in that** the housing (1) has a continuous housing base (6) or at least two housing base sections arranged consecutively at different angles to the horizontal.

6. Trailer coupling according to claim 1, 2 or 3, **characterised in that** the hinge element (10) is swivelled through ca. 90 degrees until the recess (20) in the hinge element (10) engages in the formed part (21) on the housing (1).

7. Trailer coupling according to claim 1, 2 or 3, **characterised in that** the hinge element (10) is held non-rotatably in its position of use by the contact pressure of the actuator (15).

8. Trailer coupling according to claim 1, 2 or 3, **characterised in that** the hinge element (10) is fixed in the position of use at a rear (2) and a front side wall (3) of the housing (1).

9. Trailer coupling according to claim 2, **characterised in that** the guide elements located outside the housing (1) are in the form of baffles or rails.

## Revendications

1. Attelage de remorque pour véhicules automobiles, en particulier pour véhicules de tourisme, comportant un bras d'attelage (9), dont une extrémité porte une tête orientée verticalement pour la fixation amovible d'une remorque et dont l'autre extrémité est assemblée de manière fixe à un organe à axe de rotation (10), monté de manière mobile dans un boîtier (1), le bras d'attelage (9) pouvant être déplacé en va-et-vient au moyen d'un dispositif d'avance entre une position de service orientée vers l'arrière et une position hors service agencée davantage à l'avant, le mouvement de réglage au moyen du dispositif d'avance actionné manuellement ou par force étant composé de deux mouvements, **caractérisé en ce que** l'organe à axe de rotation (10) effectue dans un boîtier (1) un mouvement de translation à partir de la position hors service dans une première partie du mouvement et effectue un pivotement dans une deuxième partie du mouvement, de telle sorte que le bras d'attelage (9), à la fin des deux mouvements qui peuvent se superposer, est amené dans la position de service, **en ce que** sur l'extrémité supérieure de l'organe à axe de rotation (10) est agencé de manière excentrée un boulon d'entraînement (11) qui se déplace à l'intérieur d'une coulisse (14) sur le boîtier (1) et entraîne l'organe à axe de rotation (10) en rotation autour de son axe médian (12), et **en ce que** l'organe à axe de rotation (10) pivote jusqu'à ce qu'un évidement (20) sur l'organe à axe de rotation (10) s'engage dans une pièce de forme (21) ajustée à celui-ci sur le boîtier (1) et est ainsi bloqué de telle sorte que l'organe à axe de rotation (10) est maintenu immobile en rotation.

2. Attelage de remorque pour véhicules automobiles, en particulier pour véhicules de tourisme, comportant un bras d'attelage (9), dont une extrémité porte une tête orientée verticalement pour la fixation amovible d'une remorque et dont l'autre extrémité est assemblée de manière fixe à un organe à axe de rotation (10), monté de manière mobile dans un boîtier (1), le bras d'attelage (9) pouvant être déplacé en va-et-vient au moyen d'un dispositif d'avance entre une position de service orientée vers l'arrière et une position hors service agencée davantage à l'avant, l'attelage de remorque comportant des éléments de guidage, agencés en dehors du boîtier (1), pour le pivotement du bras d'attelage, et le mouvement de réglage au moyen du dispositif d'avance actionné manuellement ou par force étant composé de deux mouvements, **caractérisé en ce que** l'organe à axe de rotation (10) effectue dans un boîtier (1) un mouvement de translation à partir de la position hors service dans une première partie du mouvement et effectue un pivotement dans une deuxième partie du mouvement, de telle sorte que le bras d'attelage (9), à la fin des deux mouvements qui peuvent se superposer, est amené dans la position de service, **en ce que** le bras d'attelage pivote jusqu'à ce qu'un évidement (20) sur l'organe à axe de rotation (10) s'engage dans une pièce de forme (21) ajustée à celui-ci sur le boîtier (1) et est ainsi bloqué de telle sorte que l'organe à axe de rotation (10) est maintenu immobile en rotation.

3. Attelage de remorque pour véhicules automobiles, en particulier pour véhicules de tourisme, comportant un bras d'attelage (9), dont une extrémité porte une tête orientée verticalement pour la fixation amovible d'une remorque et dont l'autre extrémité est assemblée de manière fixe à un organe à axe de rotation (10), monté de manière mobile dans un boîtier (1), le bras d'attelage (9) pouvant être déplacé en va-et-vient au moyen d'un dispositif d'avance entre une position de service orientée vers l'arrière et une position hors service agencée davantage à l'avant, et le mouvement de déplacement au moyen du dispositif d'avance actionné manuellement ou par force étant composé de deux mouvements, **caractérisé en ce que** l'organe à axe de rotation (10) effectue dans un boîtier (1) un mouvement de translation à partir de la position hors service dans une première partie du mouvement et effectue un pivotement dans une deuxième partie du mouvement, de telle sorte que le bras d'attelage (9), à la fin des deux mouvements, est amené dans la position de service, **en ce que** l'organe à axe de rotation (10) est réalisé en forme de roue dentée et vient buter à la fin de son mouvement linéaire sur une crémaillère qui est montée sur le boîtier et dans laquelle engrène l'organe à axe de rotation en forme de roue dentée, et l'organe à axe de rotation (10) pivote, et **en ce que** l'organe à axe de rotation (10) pivote jusqu'à ce qu'un évidement (20) sur l'organe à axe de rotation (10) s'engage dans une pièce de forme (21) ajustée à celui-ci sur le boîtier (1) et est ainsi bloqué, de telle sorte que l'organe à axe de rotation (10) est maintenu immobile en rotation.

4. Attelage de remorque selon la revendication 1, 2 ou 3, **caractérisé en ce que** l'évidement (20) et la pièce moulée (21) ont une forme trapézoïdale.

5. Attelage de remorque selon la revendication 1, 2 ou 3, **caractérisé en ce que** le boîtier (1) comporte un fond (6) continu ou au moins deux parties de fond agencées l'une derrière l'autre selon différents angles par rapport à l'horizontale.

6. Attelage de remorque selon la revendication 1, 2 ou 3, **caractérisé en ce que** l'organe à axe de rotation (10) est amené en pivotement sur environ 90 degrés, jusqu'à ce que l'évidement (20) sur l'organe à axe de rotation (10) s'engage dans la pièce moulée (21) sur le boîtier (1).

7. Attelage de remorque selon la revendication 1, 2 ou 3, **caractérisé en ce que** l'organe à axe de rotation (10) est maintenu immobile en rotation dans sa position de service sous l'effet de la pression d'appui du mécanisme de commande (15).

8. Attelage de remorque selon la revendication 1, 2 ou 3, **caractérisé en ce que** l'organe à axe de rotation (10) dans la position de service est fixé contre une paroi latérale arrière (2) et une paroi latérale avant (3) du boîtier (1).

9. Attelage de remorque selon la revendication 2, **caractérisé en ce que** les éléments de guidage agencés en dehors du boîtier (1) comportent des déflecteurs ou des rails.
